# FASCICULE DE BREVET EUROPEEN

(11) **EP 1 190 270 B1**
(45) Date de publication et mention de la délivrance du brevet: **05.03.2003**
(21) Numéro de dépôt: 00946025.4
(22) Date de dépôt: 27.06.2000
(51) Int. Cl.: G02B 6/43, G02B 6/42, H01S 3/00

(54) **CONNEXION OPTIQUE POUR CIRCUIT ELECTRONIQUE INTEGRE ET APPLICATION AUX INTERCONNEXIONS DE TELS CIRCUITS**
OPTISCHE VERBINDUNG FÜR INTEGRIERTE ELEKTRONISCHE SCHALTKREISE UND ANWENDUNG IN KREUZVERBINDUNGEN VON SOLCHEN SCHALTKREISEN
ELECTRONIC CIRCUIT OPTICAL CONNECTION AND USE FOR INTERCONNECTIONS IN SUCH CIRCUITS

(30) Priorité: 29.06.1999 FR 9908307
(43) Date de publication de la demande: 27.03.2002
(73) Titulaire: COMMISSARIAT A L'ENERGIE ATOMIQUE, 75752 Paris Cédex 15 (FR)
(72) Inventeur: GIDON, Serge, F-38140 La Murette (FR)
(74) Mandataire: Ilgart, Jean-Christophe
(86) Numéro de dépôt international: FR0001794
(87) Numéro de publication internationale: WO01001181

(56) Documents cités:
- EP-A- 0 617 314
- WO-A-93/09456
- DE-A- 19 523 580
- US-A- 5 835 646

## Description

### DOMAINE TECHNIQUE

La présente invention concerne une connexion optique pour circuit électronique intégré et s'applique en particulier aux interconnexions de tels circuits.

### ÉTAT DE LA TECHNIQUE ANTÉRIEURE

Le besoin de cadences de plus en plus élevées pour le fonctionnement des circuits électroniques intégrés conduit à une intégration de plus en plus poussée de ces circuits. Cette intégration trouve ses limites dans l'augmentation inévitable de la taille des circuits, ce qui conduit à une augmentation du coût de ces derniers (du fait d'une baisse du rendement de fabrication). Un compromis impose alors d'interconnecter des circuits électroniques intégrés de taille raisonnable.

Il est connu de relier deux circuits électroniques intégrés l'un à l'autre par l'intermédiaire de liens électriques. Cependant, avec l'augmentation des cadences de fonctionnement de ces circuits (fréquences d'horloge au-delà de 500 MHz), apparaissent des phénomènes de couplage électromagnétique entre conducteurs électriques parallèles, couplages qui induisent une dégradation du rapport signal/bruit et des risques de dysfonctionnement.

Il est également connu d'utiliser des liens optiques à la place des conducteurs électriques, ces liens optiques permettant une meilleure séparation entre canaux de transmission.

De tels liens optiques comprennent des émetteurs et des récepteurs de lumière ainsi que des canaux de liaison.

Les canaux de liaison peuvent utiliser des hologrammes ou des faisceaux aériens faiblement confinés ou encore des fibres optiques.

Les émetteurs et les récepteurs de lumière sont montés sur les circuits électroniques intégrés que l'on veut interconnecter et sont électriquement reliés à ces circuits.

On précise que les émetteurs sont généralement des lasers à émission par la surface à cavité verticale (« vertical cavity surface émission laser ») ou VCSEL qui n'occupent qu'une faible surface sur les substrats sur lesquels ils sont montés et ont un faible courant de seuil.

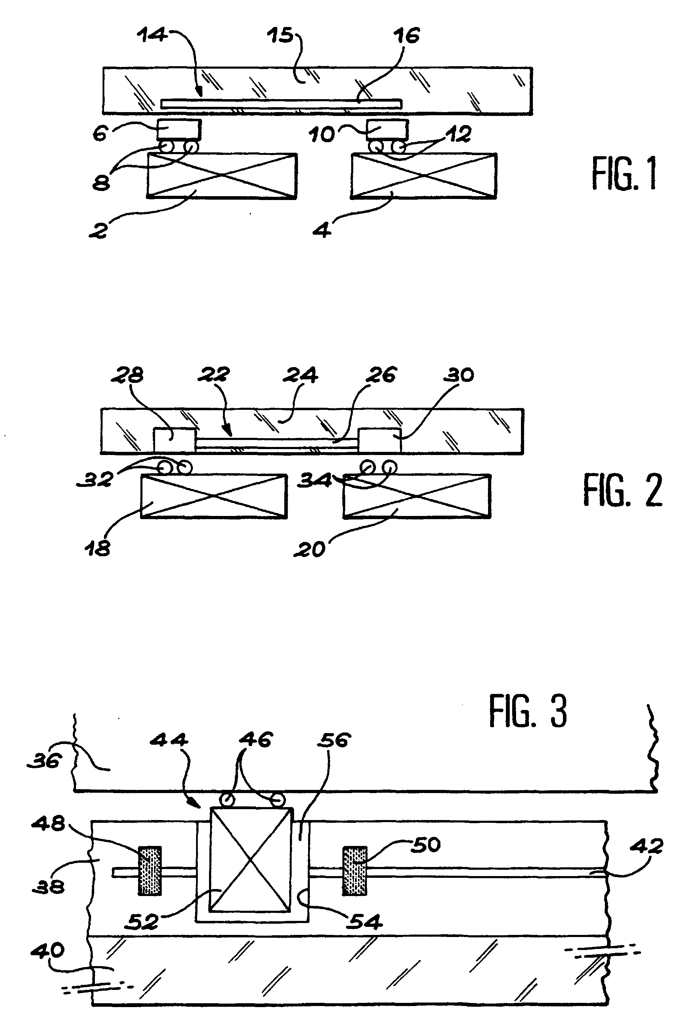

La figure 1 illustre schématiquement une interconnexion connue entre deux circuits électroniques intégrés 2 et 4. Un composant opto-électronique 6 est électriquement relié au circuit intégré 2 par l'intermédiaire de microbilles de soudure 8. Un autre composant opto-électronique 10 est électriquement relié au circuit intégré 4 par l'intermédiaire de microbilles de soudure 12.

Un circuit optique 14 formé sur un substrat 15 et comprenant un guide d'onde optique 16 est prévu pour relier optiquement les composants opto-électroniques 6 et 10 l'un à l'autre.

Le composant 6 est par exemple un émetteur de lumière tandis que le composant 10 est un récepteur de lumière.

Des signaux électriques émis par le circuit 2 sont alors convertis en signaux lumineux par le composant 6. Ces signaux lumineux se propagent dans le guide d'onde optique 16 et sont détectés par le composant 10 qui reconvertit ces signaux lumineux en signaux électriques. Le circuit intégré 4 reçoit ces derniers. On dispose donc bien d'une interconnexion entre les circuits 2 et 4.

Cependant, les interconnexions optiques entre circuits électroniques intégrés du genre de l'interconnexion de la figure 1 présentent un inconvénient: ces interconnexions nécessitent une grande précision pour « aligner », c'est-à-dire coupler optiquement, les canaux de liaisons optiques avec les émetteurs et les récepteurs de lumière. Par exemple, dans le cas de la figure 1, une précision importante est nécessaire pour le couplage optique entre le guide d'onde optique 14 et le composant 6 voire le composant 10.

### EXPOSÉ DE L'INVENTION

La présente invention a pour but de remédier à l'inconvénient précédent en proposant une interconnexion de circuits électroniques intégrés qui est plus facile à réaliser que les interconnexions connues, mentionnées plus haut, car elle nécessite des alignements de moins grande précision.

Plus généralement, la présente invention concerne une connexion optique pour un circuit électronique intégré dont la réalisation utilise un couplage de type électrique, couplage qui nécessite une précision inférieure à celle d'un couplage optique.

EP 0 617 314 A (Fujitsu Ltd) décrit des circuits optiques.
US 5 835 646 A (ISHITSUKA TAKESHI et al.) décrit des circuits optiques actifs.
DE 195 23 580 A (MOTOROLA INC) décrit un dispositif d'interconnexion optoélectronique.

De façon précise, la présente invention a pour objet une connexion optique pour un circuit électronique intégré comme définie dans la revendication 1.

La présente invention a également pour objet une connexion optique entre des premier et deuxième circuits électroniques intégrés comme définie dans la revendication 3.

Dans l'invention, chaque convertisseur électronique-optique est un laser comprenant une cavité résonante délimitée par deux miroirs qui sont formés sur le guide d'onde optique et un milieu amplificateur placé dans un évidement formé à travers ce guide d'onde optique entre les deux miroirs.

Les premier et deuxième circuits électroniques intégrés peuvent être respectivement formés sur des substrats différents ou, au contraire, sur le même substrat.

De préférence, le circuit optique et chaque circuit électronique intégré sont faits à partir de matériaux ayant sensiblement le même coefficient de dilatation thermique.

Chaque liaison purement électrique peut être faite au moyen de microbilles d'un matériau fusible.

Les deux miroirs peuvent être des réseaux de Bragg qui sont photo-inscrits ou gravés sur le guide d'onde optique.

En variante, chaque miroir peut être une fente qui traverse le guide d'onde optique.

De préférence, l'espace compris entre le milieu amplificateur et la paroi de l'évidement contient un adaptateur d'indice optique, par exemple un fluide ou un gel.

### BREVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
◆ La figure 1 est une vue en coupe transversale schématique d'une interconnexion optique connue de deux circuits électroniques intégrés et a déjà été décrite,
◆ La figure 2 est une vue en coupe transversale schématique d'une interconnexion optique de deux circuits électroniques intégrés, qui est réalisée conformément à la présente invention, et
◆ Les figures 3, 4 et 5 sont des vues en coupe transversale schématiques d'autres interconnexions optiques effectuées conformément à l'invention.

### EXPOSÉ DÉTAILLÉ DE MODES DE RÉALISATION PARTICULIERS

Dans la présente invention, on utilise les techniques de l'Optique intégrée pour réaliser des interconnexions optiques de circuits électroniques intégrés.

Un circuit optique intégré assure un lien physique entre ces circuits électroniques intégrés.

Les techniques de l'Optique intégrée permettent de réaliser, dans un empilement de couches gravées (éventuellement partiellement gravées), des guides d'onde optique dont les dimensions valent généralement quelques micromètres. Deux guides d'onde optique voisins sont susceptibles d'être sujets à une diaphotie qui est faible à partir du moment où la distance entre ces guides d'onde optique est supérieure à l'étendue du champ évanescent qui vaut généralement 10 µm.

De plus, la lumière ayant naturellement tendance à se propager en ligne droite, on peut former des croisements entre des guides d'ondes optiques avec de faibles pertes de croisement et peu de diaphotie.

Les guides d'ondes optiques sont donc adaptés à la réalisation de liens pour les interconnexions optiques.

Les techniques de l'Optique intégrée peuvent être mises en oeuvre avec des matériaux tels que InP, AsGa, SiO₂ et Si. De tels matériaux sont utilisables dans la présente invention pour former le circuit optique.

Dans l'invention, il est avantageux d'utiliser des matériaux ayant sensiblement les mêmes coefficients de dilatation thermique pour réaliser le circuit optique et les circuits électroniques intégrés. Par exemple, si ces derniers sont en silicium, il est préférable de former le circuit optique également à partir du silicium.

L'interconnexion optique de la figure 2 est destinée à relier deux circuits électroniques intégrés 18 et 20 l'un à l'autre. Cette interconnexion optique comprend un circuit optique 22 formé sur un substrat 24 et comprenant un guide d'onde optique 26 ainsi que deux composants opto-électroniques 28 et 30 qui sont optiquement couplés respectivement aux deux extrémités du guide d'onde optique 26 et sont respectivement associés aux circuits 18 et 20.

Le circuit optique 22 est relié à ces circuits 18 et 20 par l'intermédiaire des composants 28 et 30, ces liaisons étant purement électriques et réalisées à partir par exemple de microbilles 32 et 34 faites d'un matériau fusible, par exemple l'indium. D'autres techniques existent en particulier l'utilisation de polymères à conduction anisotrope.

L'espace que l'on voit sur la figure 2 entre les microbilles et le circuit optique n'existe bien entendu pas ; cet espace a été laissé sur la figure 2 pour mieux comparer cette dernière à la figure 1.

On suppose que le circuit 18 est destiné à envoyer des informations au circuit 20. Dans ce cas, le composant 28 est un convertisseur électronique-optique, par exemple une diode laser, qui convertit les signaux électriques qu'elle reçoit de la part du circuit 18 par l'intermédiaire des microbilles 32, en signaux optiques. Ces derniers sont alors transmis par l'intermédiaire du guide 26 au composant 30 qui, dans ce cas, est un convertisseur opto-électrique, par exemple une photodiode. Cette dernière reconvertit ces signaux optiques en signaux électriques qui sont alors reçus par le circuit 20, par l'intermédiaire des microbilles 34.

Dans le cas où le circuit 20 est destiné à envoyer des informations au circuit 18, on utilise en tant que composant 30 un convertisseur électronique-optique et en tant que composant 28 un convertisseur opto-électrique. Les informations émises par le circuit 20 sous forme de signaux électriques sont alors reçues par le circuit 18 après avoir été converties en signaux optiques par le composant 30 puis à nouveau en signaux électriques par le composant 28.

Dans le cas où les circuits 18 et 20 sont destinés à échanger des informations l'un avec l'autre, le circuit 18 envoyant alors des informations au circuit 20 et inversement, on utilise des composants 28 et 30 ayant la double fonction de convertisseur électronique-optique et de convertisseur opto-électrique. On peut aussi prévoir des liaisons « descendantes » et d'autres « montantes ».

L'hybridation des composants 28 et 30 à leurs circuits respectifs 18 et 20, par exemple par l'intermédiaire des microbilles 32 et 34, nécessite une précision de positionnement inférieure à celle que nécessite le positionnement du circuit optique 14 de la figure 1 par rapport aux composants 6 et 10.

Lorsque les circuits électroniques intégrés et le circuit optique sont formés à partir de silicium, matériau mal adapté à la réalisation de sources optiques à cause de son gap indirect, il convient alors d'utiliser des émetteurs de lumière hybridés au circuit optique et par exemple formés à partir d'un matériau semiconducteur à gap direct tel que GaAs. Pour cette hybridation, on peut utiliser toute technique classique d'assemblage comme l'adhérence, le collage ou la fusion métallique.

Dans ce cas, pour coupler optiquement l'émetteur de lumière avec le guide d'onde optique, on fait en sorte que ce guide d'onde optique contribue spécifiquement à l'émission lumineuse de cet émetteur. On réduit ainsi les contraintes de positionnement de l'émetteur par rapport au guide d'onde optique.

Pour ce faire, on réalise un laser dont la cavité comprend une partie du guide d'onde optique : on forme les miroirs de cette cavité sur ce guide d'onde optique et l'on introduit un milieu amplificateur laser dans le guide.

Ceci est schématiquement illustré par l'exemple de la figure 3 où l'on voit un circuit intégré 36 destiné à envoyer des informations à un autre circuit intégré (non représenté) par l'intermédiaire d'un circuit optique 38 formé sur un substrat 40 et comprenant un guide d'onde optique 42 ainsi qu'un laser 44 qui constitue un convertisseur électro-optique.

Ce laser 44 est commandé par le circuit intégré 36 et relié à ce dernier par une liaison purement électrique réalisée à l'aide par exemple de microbilles 46 faites d'un matériau fusible.

Le laser 44 comprend une cavité résonante délimitée par deux miroirs 48 et 50, qui sont formés sur le guide d'onde optique 42, ainsi qu'un milieu amplificateur à semiconducteur 52 qui est placé au voisinage du guide par exemple dans un évidement 54 formé dans le circuit optique 38, à travers ce guide d'onde optique 42 et entre les deux miroirs 48 et 50.

Le laser de la figure 3 est muni d'électrodes (non représentées) destinées à l'excitation du milieu amplificateur. Ces électrodes sont reliées au circuit électronique intégré 36 par l'intermédiaire des microbilles.

L'espace 56 compris entre le milieu amplificateur et la paroi de l'évidement est de préférence rempli d'un matériau adaptateur d'indice par exemple fluide ou gel pour favoriser le couplage optique entre ce milieu amplificateur et le guide d'onde optique 42.

Divers matériaux sont envisageables pour former le milieu amplificateur 52. On peut par exemple utiliser des matériaux semi-conducteurs à puits quantiques, du genre de ceux qui sont utilisés dans les VCSEL et comprennent plusieurs couches de confinement (puits).

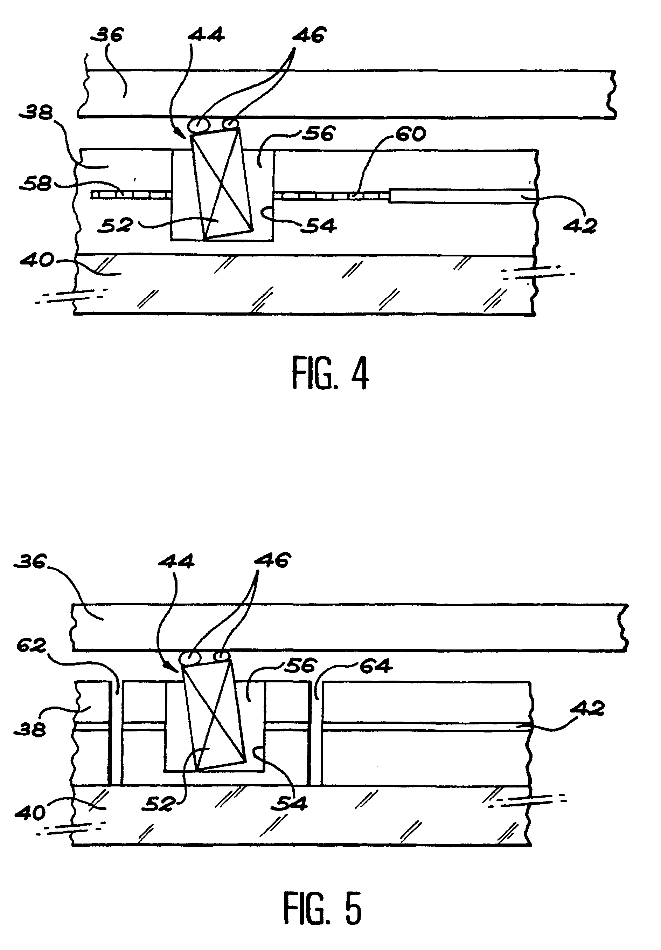

On peut faire en sorte que ces couches soient plus ou moins inclinées par rapport à la paroi de l'évidement 54 (figure 4) pour respecter une tolérance de positionnement et le gain recherché pour le laser. Ce gain dépend du coefficient de réflexion des miroirs qui délimitent la cavité du laser.

Dans le cas de l'utilisation d'une technique d'Optique intégrée du genre silice sur silicium, il est avantageux d'utiliser des miroirs formés par des réseaux de diffraction de Bragg 58 et 60 (figure 4) que l'on photo-inscrit sur le guide d'onde optique 42.

Au sujet de miroirs formés à partir de réseaux de Bragg on se reportera par exemple au document suivant :
A. Goyal et M. Muendel, Photonics Spectra, septembre 1998, pages 116 à 121.

Dans le cas où le guide d'onde optique est formé à partir d'un matériau ayant un grand indice optique, par exemple par une technique du genre silicium sur isolant, dans laquelle une couche de guidage de lumière en silicium est comprise entre deux couches de silice, les miroirs peuvent être des fentes 62 et 64 (figure 5) formées dans le circuit optique, à travers le guide d'onde optique 42 et perpendiculairement à ce dernier, de part et d'autre de l'évidement 54 dans lequel se trouve le milieu amplificateur 52. Les réflexions de la lumière ont alors lieu aux interfaces air-parois des fentes.

L'invention n'est pas limitée à l'interconnexion de deux circuits électroniques intégrés formés sur deux substrats différents (interconnexion inter-puce) comme on l'a représenté sur la figure 2. Elle s'applique également à l'interconnexion de deux circuits intégrés formés sur un même substrat (interconnexion intra-puce).

De plus, l'invention n'est pas limitée à l'interconnexion de deux circuits électroniques intégrés. Elle s'applique également à la connexion optique d'un circuit électronique intégré, au moyen d'un circuit optique formé sur un substrat et comprenant encore un guide d'onde optique ainsi qu'un composant opto-électronique qui est optiquement couplé à ce guide d'onde optique et qui est relié au circuit électronique intégré par l'intermédiaire d'une liaison purement électrique entre ce composant et ce circuit électronique intégré.

Lorsque le composant est utilisé en tant que convertisseur électronique-optique, cela permet de convertir des signaux électriques émis par le circuit électronique intégré en signaux lumineux qui se propage alors dans le guide optique.

Inversement, en utilisant la fonction de convertisseur opto-électrique du composant, cela permet à ce dernier de recevoir des signaux lumineux se propageant dans le guide d'onde optique et de les convertir en signaux électriques qui sont alors reçus par le circuit électronique intégré.

Une telle connexion trouve des applications aux entrées/sorties d'un circuit électronique intégré : des signaux lumineux peuvent être injectés par tout moyen dans le guide d'onde optique et reçus sous forme de signaux électriques par le circuit intégré ou, inversement, ce circuit électronique intégré peut émettre des signaux électriques qui sont alors convertis en signaux optiques, se propagent dans le guide d'onde optique et peuvent alors être détectés par un photodétecteur optiquement couplé par tout moyen approprié à ce guide d'onde optique.

## Revendications

1. Connexion optique pour un circuit électronique intégré (36), cette connexion optique comprenant un circuit optique (38) formé sur un substrat (40) et comprenant un guide d'onde optique (42) et un composant optoélectronique (44) qui est optiquement couplé au guide d'onde optique et a une fonction de convertisseur électronique-optique et où le circuit optique est relié au circuit électronique intégré par l'intermédiaire d'une liaison purement électrique (46) entre le composant optoélectronique et le circuit électronique intégré de manière à convertir des signaux électriques émis par le circuit électronique intégré en signaux optiques qui se propagent alors dans le guide d'onde optique, ladite connexion optique étant **caractérisée en ce que** ledit composant optoélectronique est un laser comprenant une cavité résonante délimitée par deux miroirs (48-50, 58-60, 62-64) qui sont formés sur le guide d'onde optique (42) et un milieu amplificateur (52) placé dans un évidement (54) formé à travers ce guide d'onde optique entre les deux miroirs.

2. Connexion optique selon la revendication 1 **caractérisée en ce que** le composant optoélectronique (44) qui est optiquement couplé au guide d'onde optique a également une fonction de convertisseur opto-électronique permettant de convertir les signaux optiques qui se propagent dans le guide d'onde optique en signaux électriques qui sont alors reçus par le circuit électronique intégré.

3. Connexion optique entre des premier et deuxième circuits électroniques intégrés (18, 20), comprenant un circuit optique (22) formé sur un substrat (24) et comprenant un guide d'onde optique (26) et des premier et deuxième composants optoélectroniques (28, 30) qui sont optiquement couplés au guide d'onde optique, le premier composant optoélectronique (28) ayant au moins l'une des deux fonctions, de convertisseur électronique-optique et de convertisseur opto-électronique et le deuxième composant optoélectronique (30) ayant une fonction de convertisseur opto-électronique, lorsque le premier composant a la fonction de convertisseur électronique-optique ou une fonction de convertisseur électronique-optique, lorsque le premier composant a la fonction de convertisseur opto-électronique ou ces deux fonctions et où le circuit optique est relié aux premier et deuxième circuits électroniques intégrés par l'intermédiaire de liaisons purement électriques (32, 34) entre respectivement les premier et deuxième composants optoélectroniques (28, 30) et les premier et deuxième circuits électroniques intégrés (18, 20) de manière que des signaux électriques émis par le premier et/ou le deuxième circuit électronique intégré soient convertis en signaux optiques qui se propagent alors dans le guide d'onde optique et sont ensuite reconvertis en signaux électriques, ces derniers étant alors reçus par le deuxième et/ou le premier circuit électronique intégré, cette connexion optique étant **caractérisée en ce que** chaque composant optoélectronique est un laser comprenant une cavité résonante délimitée par deux miroirs (48-50, 58-60, 62-64) qui sont formés sur le guide d'onde optique (42) et un milieu amplificateur (52) placé dans un évidement (54) formé à travers ce guide d'onde optique entre les deux miroirs.

4. Connexion selon la revendication 3, dans laquelle les premier et deuxième circuits électroniques intégrés (18, 20) sont respectivement formés sur des substrats différents.

5. Connexion selon la revendication 3, dans laquelle les premier et deuxième circuits électroniques intégrés sont formés sur le même substrat.

6. Connexion selon l'une quelconque des revendications 1 à 5, dans laquelle le circuit optique et chaque circuit électronique intégré sont faits à partir de matériaux ayant sensiblement le même coefficient de dilatation thermique.

7. Connexion selon l'une quelconque des revendications 1 à 6, dans laquelle chaque liaison purement électrique est faite au moyen de microbilles (32, 34, 46) d'un matériau fusible.

8. Connexion selon l'une quelconque des revendications 1 à 7, dans laquelle les deux miroirs sont des réseaux de Bragg (58, 60) qui sont photo-inscrits ou gravés sur le guide d'onde optique.

9. Connexion selon l'une quelconque des revendications 1 à 7, dans laquelle chaque miroir est une fente (62, 64) qui traverse le guide d'onde optique.

10. Connexion selon l'une quelconque des revendications 1 à 9, dans laquelle l'espace (56) compris entre le milieu amplificateur (52) et la paroi de l'évidement (54) contient un adaptateur d'indice optique.

## Claims

1. Optical connection for an integrated electronic circuit (36), this optical connection comprising an optical circuit (38) formed on a substrate (40) and comprising an optical waveguide (42) and an optoelectronic component (44) which is optically coupled with the optical waveguide and has an electronic-optical converter function and where the optical circuit is connected to the integrated electronic circuit via a purely electrical link (46) between the optoelectronic component and the integrated electronic circuit so as to convert electrical signals transmitted by the integrated electronic circuit into optical signals which then propagate in the optical waveguide, said optical connection being **characterized in that** said optoelectronic component is a laser comprising a resonant cavity delimited by two mirrors (48-50, 58-60, 62-64) which are formed on the optical waveguide (42) and an amplifying medium (52) placed in a recess (54) formed across said optical waveguide between both mirrors.

2. Optical connection according to claim 1, **characterized in that** the optoelectronic component (44) optically coupled to the optical waveguide also has an optoelectronic converter function permitting the conversion of optical signals, which propagate in the optical waveguide, to be converted into electrical signals, which are then received by the integrated electronic circuit.

3. Optical connection between first and second integrated electronic circuits (18, 20), comprising an optical circuit (22) formed on a substrate (24) and comprising an optical waveguide (26) and first and second optoelectronic components (28, 30), which are optically coupled with the optical waveguide, the first optoelectronic component (28) having at least either of the two electronic-optical and optoelectronic converter functions and the second optoelectronic component (30) having an optoelectronic converter function when the first component has the electronic-optical converter function, or an electronic-optical converter function when the first component has the optoelectronic converter function or both of said functions and where the optical circuit is connected to the first and second integrated electronic circuit via purely electrical links (32, 34) between the first and second optoelectronic components (28, 30) and the first and second integrated electronic circuits (18, 20) respectively, so that electrical signals transmitted by the first and/or the second integrated electronic circuit are converted into optical signals which then propagate in the optical waveguide and are then reconverted into electrical signals, the latter being then received by the second and/or first integrated electronic signal, said optical connection being **characterized in that** the optoelectronic component is a laser comprising a resonant cavity delimited by two mirrors (48-50, 58-60, 62-64), which are formed on the optical waveguide (42) and an amplifying medium (52) placed in a recess (54) formed across this optical waveguide between both mirrors.

4. Connection according to claim 3, wherein the first and second integrated electronic circuits (18, 20) are formed on different substrates, respectively.

5. Connection according to claim 3, wherein the first and second integrated electronic circuits are formed on the same substrate.

6. Connection according to any of claims 1 to 5, wherein the optical circuit and each integrated electronic circuit are made from materials having substantially the same thermal expansion coefficient.

7. Connection according to any of claims 1 to 6, wherein each purely electrical link is made by means of microbeads (32, 34, 46) of a fusible material.

8. Connection according to any of claims 1 to 7, wherein both mirrors are Bragg gratings (58, 60) which are photo-engraved or etched on the optical waveguide.

9. Connection according to any of claims 1 to 7, wherein each mirror is a slot (62, 61) which crosses the optical waveguide.

10. Connection according to any of claims 1 to 9, wherein the space (56) between the amplifying medium (52) and the wall of the recess (54) contains an optical index adapter.

## Patentansprüche

1. Optische Verbindung für einen integrierten elektronischen Schaltkreis (36), wobei diese optische Verbindung eine auf einem Substrat (40) ausgebildete optische Schaltung (38) mit einem Lichtwellenleiter (42) und einem optisch-elektronischen Bauteil (44) umfasst, das optisch mit dem Lichtwellenleiter gekoppelt ist und eine elektronisch-optische Umwandlerfunktion hat, und wo die optische Schaltung mit dem integrierten elektronischen Schaltkreis durch eine rein elektrische Verbindung (46) zwischen dem optisch-elektronischen Bauteil und dem integrierten elektronischen Schaltkreis verbunden ist, um elektrische Signale, gesendet durch den integrierten elektronischen Schaltkreis, in optische Signale umzuwandeln, die sich dann in dem Lichtwellenleiter ausbreiten, wobei die genannte optische Verbindung
**dadurch gekennzeichnet ist, dass** das genannte optisch-elektronische Bauteil ein Laser ist, der einen Resonator umfasst, der durch zwei Spiegel (48-50, 58-60, 62-64) begrenzt wird, die an dem Lichtwellenleiter (42) ausgebildet sind, und ein Verstärkermedium (52) umfasst, angeordnet in einer Aussparung (54), die in dem Lichtwellenleiter vorgesehen ist, zwischen den beiden Spiegeln.

2. Optische Verbindung nach Anspruch 1, **dadurch gekennzeichnet, dass** das optisch-elektronische Bauteil (44), das optisch mit dem Lichtwellenleiter gekoppelt ist, auch eine optisch-elektronische Umwandlerfunktion hat, die ermöglicht, die optischen Signale, die sich in dem Lichtwellenleiter ausbreiten, in elektrische Signale umzuwandeln, die dann von dem integrierten elektronischen Schaltkreis empfangen werden.

3. Optische Verbindung zwischen ersten und zweiten integrierten elektronischen Schaltkreisen (18, 20), eine optische Schaltung (22) umfassend, ausgebildet auf einem Substrat (24) und einen Lichtwellenleiter (26) und erste und zweite optisch-elektronische Bauteile (28, 30) enthaltend, die optisch mit dem Lichtwellenleiter gekoppelt sind, wobei das erste elektrooptische Bauteil (28) wenigstens entweder eine optisch-elektronische Umwandlerfunktion hat, wenn das erste Bauteil die elektronisch-optische Umwandlerfunktion hat, oder eine elektronisch-optische Umwandlerfunktion hat, wenn das erste Bauteil die optisch-elektronische Umwandlerfunktion hat, und wo die optische Schaltung mit dem ersten und zweiten integrierten elektronischen Schaltkreis durch rein elektrische Verbindungen (32, 34) zwischen jeweils dem ersten und zweiten optisch-elektronischen Bauteil (28, 30) und den integrierten elektronischen Schaltkreisen (18, 20) verbunden ist, um elektrische Signale, gesendet durch den ersten und/oder zweiten integrierten elektronischen Schaltkreis, in optische Signale umzuwandeln, die sich dann in dem Lichtwellenleiter ausbreiten und anschließend wieder in elektrische Signale umgewandelt werden, die durch den zweiten und/oder ersten integrierten elektronischen Schaltkreis empfangen werden, wobei diese optische Verbindung **dadurch gekennzeichnet ist, dass** jedes optisch-elektronische Bauteil ein Laser ist, der einen Resonator umfasst, der durch zwei Spiegel (48-50, 58-60, 62-64) begrenzt wird, die an dem Lichtwellenleiter (42) ausgebildet sind, und ein Verstärkermedium (52) umfasst, angeordnet in einer Aussparung (54), die in dem Lichtwellenleiter vorgesehen ist, zwischen den beiden Spiegeln.

4. Verbindung nach Anspruch 3, bei der der erste und der zweite elektronische Schaltkreis (18, 20) auf jeweils verschiedenen Substraten ausgebildet sind.

5. Verbindung nach Anspruch 3, bei der der erste und der zweite elektronische Schaltkreis (18, 20) auf demselben Substrat ausgebildet sind.

6. Verbindung nach einem der Ansprüche 1 bis 5, bei der die optische Schaltung und jeder integrierte elektronische Schaltkreis aus Materialien gemacht sind, die im Wesentlichen den gleichen Wärmeausdehnungskoeffizienten haben.

7. Verbindung nach einem der Ansprüche 1 bis 6, bei der jede rein elektrische Verbindung durch Mikrokugeln (32, 34, 46) aus einem schmelzbaren Material hergestellt wird.

8. Verbindung nach einem der Ansprüche 1 bis 7, bei der die beiden Spiegel Bragg-Gitter (58, 60) sind, in den Lichtwellenleiter durch Ätzung oder Photoinduktion erzeugt.

9. Verbindung nach einem der Ansprüche 1 bis 7, bei der jeder Spiegel ein Schlitz (62, 64) ist, der den Lichtwellenleiter durchquert.

10. Verbindung nach einem der Ansprüche 1 bis 9, bei der der zwischen dem Verstärkermedium (52) und der Aussparungswand (54) enthaltene Raum (56) einen Brechzahl-Adapter enthält.
